# DEMANDE DE BREVET EUROPEEN

(11) **EP 1 317 076 A1**
(43) Date de publication de la demande: **04.06.2003**
(21) Numéro de dépôt: 02292827.9
(22) Date de dépôt: 14.11.2002
(51) Int. Cl.: H04B 1/707

(54) **Procédé de transmission de communications dans un système de télécommunication de type cellulaire utilisant des bandes de fréquences porteuses adjacentes**

(30) Priorité: 22.11.2001 FR 0115109
(71) Demandeur: Evolium S.A.S., 75008 Paris (FR)
(72) Inventeur: Dartois, Luc, 78955 Carrieres sous Poissy (FR)
(74) Mandataire: El Manouni, Josiane

(57) **Abrégé**

L'invention concerne un procédé de transmission de communications dans un système de télécommunication de type cellulaire faisant appel à plusieurs bandes de fréquences porteuses adjacentes et dans lequel une première cellule, ou un premier site, utilise seulement une partie de ces bandes de fréquences, les signaux émis étant soumis à un écrêtage avant leur application à un amplificateur d'une chaîne d'émission afin d'optimiser le rendement de ce dernier.

On soumet les signaux (32) à émettre pour la première cellule (ou le premier site), avant leur application à l'entrée de l'amplificateur, à un filtrage (28) pour lequel la densité de puissance du bruit d'écrêtage dans les bandes de fréquence adjacentes (f₂, f₃) non utilisées par cette première cellule n'est pas éliminée.

## Description

L'invention concerne un procédé de transmission de communications dans un système de télécommunication de type cellulaire utilisant des bandes de fréquences porteuses adjacentes.

Elle est également relative à un émetteur comportant un amplificateur de puissance pour système de télécommunication de type cellulaire auquel on attribue plusieurs bandes de fréquences adjacentes. Elle concerne plus particulièrement, mais non exclusivement, un système de télécommunications dans lequel les communications se distinguent les unes des autres par des codes orthogonaux. On sait que dans un système de télécommunication de type cellulaire, les communications des terminaux se trouvant dans une cellule ou un site sont relayées par l'intermédiaire d'une station de base. On précise ici que, conformément à la norme UMTS, on appelle "cellule" une zone géographique à laquelle on affecte une seule bande de fréquences porteuses alors qu'on appelle "site", une zone géographique à laquelle on affecte plusieurs bandes de fréquences porteuses et/ou plusieurs secteurs, en général adjacents. Dans ce dernier cas, on utilise en général un même amplificateur de puissance pour l'ensemble des bandes de fréquences porteuses de ce secteur appelé alors "amplificateur multiporteuses" . De façon plus générale, afin de minimiser le nombre de types d'équipements à produire, il est préférable d'utiliser un même type d'émetteur (de même classe de puissance), et un même type d'amplificateur de puissance dans tous les secteurs de tous les sites.

Un amplificateur de puissance de ce type doit satisfaire à un certain nombre d'exigences contradictoires ; en particulier, cet amplificateur doit conserver ses propriétés de linéarité sur une large gamme tout en présentant un rendement énergétique élevé.

Un amplificateur de puissance destiné à la transmission de plusieurs fréquences porteuses adjacentes présente un rapport entre puissance de crête et puissance moyenne élevée (ce rapport est souvent noté PAR, soit "Peak to Average Ratio" en langue anglaise). Plus ce rapport est élevé et plus le rendement de l'amplificateur est faible. Pour remédier à cet inconvénient, il est connu de limiter la puissance de crête du signal combiné avant son application à l'entrée de l'amplificateur. Mais cet écrêtage entraîne une altération du signal et provoque donc des distorsions dans la bande considérée et aussi en dehors de cette ou ces bandes. Pour respecter les normes de pollution hors bande, l'écrêtage est donc limité, c'est-à-dire que l'augmentation du rendement que l'on peut obtenir avec cette technique est limitée.

En raison de ces diverses contraintes, il n'est en général pas possible d'utiliser le même type de chaîne d'amplification de puissance, c'est-à-dire le même émetteur, pour un site étendu, à densité d'abonnés relativement faible telle qu'une cellule de zone rurale avec une seule bande de fréquences, et un ou plusieurs sites à densité d'utilisateurs sensiblement plus élevée utilisant habituellement plusieurs bandes de fréquences adjacentes.

En particulier, si un opérateur désire utiliser un même type d'équipement d'émission pour une cellule "rurale" avec une seule bande de fréquences et pour un ou plusieurs sites "urbains" avec N, par exemple 3, bandes de fréquences adjacentes, même si on utilise un procédé d'écrêtage efficace, la puissance d'émission pour la cellule rurale est limitée à N fois la puissance par porteuse pour les autres sites. En raison du facteur d'atténuation due à la propagation qui est de l'ordre de 2,5, si l'opérateur veut ouvrir un service de données rapides dans la cellule rurale avec une seule bande de fréquences, le rayon de cette cellule rurale est moins de deux fois le rayon d'une cellule urbaine à trafic élevé.

L'invention permet d'augmenter le rayon des cellules (ou sites) rurales. Elle est basée sur la constatation que les normes, notamment la norme UMTS/CDMA, imposent des contraintes spectrales pour les effets d'une bande sur une autre qui peuvent parfois s'avérer surabondantes pour garantir une qualité de service correcte et une capacité élevée.

Ainsi, l'invention concerne un procédé d'écrêtage d'un signal sur un amplificateur de puissance qui est caractérisé en ce qu'on étale l'écrêtage d'une (ou plusieurs) porteuse(s) utile(s) sur une (ou des) porteuse(s) adjacente(s) non utilisée(s). Par exemple, dans une cellule rurale utilisant une seule bande de fréquences porteuses, on augmente l'écrêtage, c'est-à-dire qu'on diminue la puissance de crête en "polluant" les bandes de fréquences adjacentes, cette pollution étant cependant limitée de façon telle que la qualité des signaux émis par les cellules ou sites adjacents, par exemple utilisant le même type d'amplificateur de puissance, ne soit pas affectée.

Ce procédé permet un gain de puissance d'environ 2dB pour une cellule rurale. On peut ainsi augmenter le rayon de cette cellule et/ou augmenter son nombre d'abonnés. Une augmentation de 2dB correspond, par exemple, à une augmentation de puissance de 30 à 47 Watts. On peut donc conférer à une cellule rurale une puissance qui est supérieure à la somme des puissances affectées à l'ensemble des sites voisins.

Le rendement de l'amplificateur qui, sans l'invention, est de l'ordre de 15 %, monte à une valeur de l'ordre de 24 % avec l'invention.

Dans un mode de réalisation de l'invention, on choisit pour la cellule utilisant une bande de fréquences unique la bande de fréquences se trouvant sensiblement au milieu de la bande de l'opérateur concerné. Cependant, l'invention n'est pas limitée au cas d'une cellule utilisant une seule bande. Il est aussi possible qu'un site utilise deux bandes et qu'on fasse appel à une ou deux bandes adjacentes pour contribuer à l'écrêtag des bandes utiles.

L'invention concerne ainsi, de façon générale, un procédé de transmission de communications dans un système de télécommunication de type cellulaire faisant appel à plusieurs bandes de fréquences porteuses adjacentes et dans lequel une première cellule ou un premier site utilise seulement une partie de ces bandes de fréquences, les signaux émis étant soumis à un écrêtage avant leur application à un amplificateur d'une chaîne d'émission afin d'optimiser le rendement de ce dernier. Ce procédé est caractérisé en ce qu'on soumet les signaux à émettre pour la première cellule (ou le premier site), avant leur application à l'entrée de l'amplificateur, à un filtrage pour lequel la densité de puissance du bruit d'écrêtage dans les bandes de fréquence adjacentes non-utilisées par cette première cellule n'est pas éliminée.

Dans une réalisation, la densité de puissance du bruit d'écrêtage dans la (les) bande(s) de fréquences adjacente(s) est limitée en puissance de façon à ne pas créer, pour les fréquences adjacentes utilisées par les sites voisins, une contribution mesurable d'interférence.

Le filtrage pour la (les) bande(s) de fréquence(s) utile(s) de la première cellule (ou premier site) peut présenter la même atténuation que le filtrage pour l' (les) autre(s) bande(s) de fréquence(s).

En variante, le filtrage pour la (les) bande(s) de fréquence(s) utile(s) de la première cellule (ou du premier site) présente une atténuation supérieure à l'atténuation affectée à (aux) (l')autre(s) bande(s) de fréquence(s). Selon une réalisation, le filtrage est tel que la contribution spectrale des distorsions dues à l'écrêtage est moindre dans la (les) bande(s) de fréquences utilisée(s) par la première cellule (ou le premier site) que dans la bande (les bandes) de fréquences adjacentes.

De préférence, le filtrage sur les bandes adjacentes à la (aux) bande(s) utile(s) pour la première cellule (ou le premier site) est choisi pour créer des interférences sur les sites ou cellules adjacents qui soient d'un niveau inférieur aux interférences propres créées dans ces sites ou cellules adjacents.

Selon une réalisation, à chaque communication est affecté un code choisi parmi un ensemble de codes orthogonaux.

Dans une réalisation préférée, on attribue à la première cellule (ou au premier site) une bande de fréquences, ou un ensemble de bandes de fréquences, se trouvant au centre d'un groupe de bandes de fréquences utilisées par des cellules ou sites adjacents.

On peut conférer à la première cellule (ou au premier site) une puissance d'émission qui est supérieure à la somme des puissances d'émission dans les sites ou cellules adjacents.

Dans ce cas, il est avantageux que l'amplificateur utilisé pour la chaîne d'émission dans la première cellule (ou premier site) et les amplificateurs utilisés pour les chaînes d'émission dans les sites ou cellules adjacents soient tous du type multiporteuses et ont tous les mêmes caractéristiques, à l'exception des marges de puissance, la marge de puissance de l'amplificateur de la première cellule (ou premier site) étant plus faible que la marge de puissance des amplificateurs pour les sites adjacents.

L'invention concerne aussi un émetteur à amplificateur de puissance pour système de télécommunication cellulaire utilisant plusieurs bandes de fréquences porteuses différentes, cet émetteur étant destiné à une cellule ou site à laquelle (auquel) est attribué un nombre de bandes de fréquences porteuses inférieur au nombre total des bandes disponibles pour le système, cet émetteur étant pourvu de moyens d'écrêtage des signaux en amont d'un amplificateur de façon à optimiser le rendement de ce dernier. Cet émetteur est caractérisé en ce qu'il comporte un gabarit de filtrage qui effectue un écrêtage dans la (ou les) bande(s) de fréquences porteuses utile(s) pour la cellule (ou site) ainsi que dans la (ou les) autre(s) bande(s) porteuse(s) du système de télécommunication, la contribution spectrale de puissance de cet écrêtage étant non nulle pour cette (ou ces) autre(s) bande(s) porteuse(s).

Dans une réalisation, le gabarit de filtrage comporte la même puissance d'écrêtage dans la (les) bande(s) de fréquences utile(s) que dans l' (les) autre(s) bande(s).

En variante, le gabarit de filtrage est tel que l'atténuation est supérieure dans la (les) bande(s) utile(s) pour la première cellule que dans l' (les) autre(s) bande(s).

D'autres caractéristiques et avantages de l'invention apparaîtront avec la description de certains de ses modes de réalisation, celle-ci étant effectuée en se référant aux dessins ci-annexés sur lesquels :
la figure 1 représente une cellule de type rural et trois sites à trafic élevé d'un système de télécommunication,
la figure 2 est un schéma montrant dans le domaine fréquentiel l'écrêtage réalisé dans la cellule de type rural par le procédé d'écrêtage connu et,
les figures 3, 4 et 5 sont des schémas analogues à celui de la figure 2, mais pour trois exemples de réalisation du procédé conforme à l'invention.

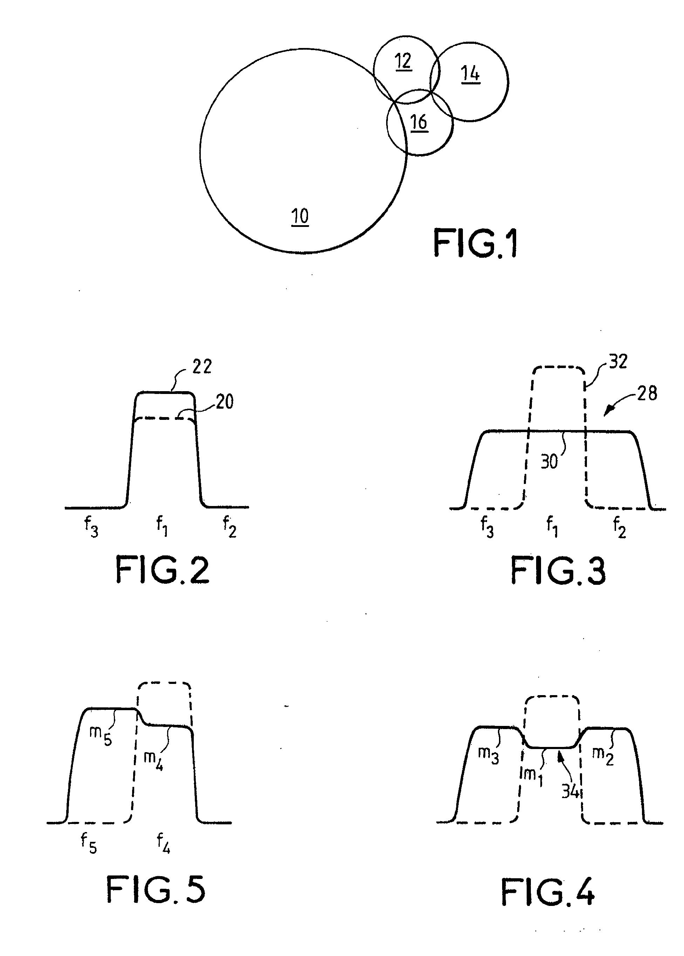

L'exemple que l'on va maintenant décrire en relation avec les figures se rapporte à un système de télécommunications de type cellulaire pour terminaux mobiles faisant appel à la norme UMTS/CDMA. Dans cet exemple, une station de base est utilisée pour chaque site et la station de base de chaque site comporte un même émetteur et un même amplificateur de puissance pour plusieurs cellules (on rappelle que, selon la norme UMTS, une cellule ne correspond qu'à une seule bande de fréquences). Conformément à la norme, chaque opérateur dispose d'au maximum trois ou quatre bandes de fréquences de 5 mégahertz chacune et les communications transmises par une station de base vers les mobiles sont chacune affectées d'un code. Les divers codes émis simultanément par la station de base sur une même fréquence vers les mobiles sont orthogonaux entre eux de façon que chaque mobile reçoive seulement la communication qui lui est destinée par multiplication, dans le mobile, du code par les codes reçus. En effet, le produit de deux codes identiques est égal à 1, tandis que le produit de deux codes différents, orthogonaux est, nul. L'invention vise surtout à résoudre le problème, illustré sur la figure 1, d'une station de base affectée à l'émission pour une cellule 10 à faible trafic de relativement grande étendue et pour laquelle l'opérateur n'utilise qu'une seule bande des fréquences qui lui est attribuée (ou un nombre limité des bandes de fréquences attribuées), alors que l'opérateur émet aussi sur des sites adjacents de dimensions plus réduites, à trafic élevé 12, 14, 16. A chacun de ces sites 12, 14 et 16, on affecte l'ensemble des bandes de fréquences de l'opérateur, trois dans l'exemple. Ces bandes de fréquences sont adjacentes et comprennent la bande centrale de fréquences de la cellule 10 à faible débit.

Dans une telle situation, jusqu'à présent, pour optimiser le rendement de l'amplificateur de puissance de l'émetteur radio de la station de base de la cellule rurale 10, on écrête les signaux affectés à cette bande de fréquences f₁ (figure 2) en appliquant aux signaux à émettre par la cellule 10, avant leur amplification, un gabarit spectral tel que la puissance dans la bande utile f₁ pour la cellule 10 est limitée, avec un maximum 20 inférieur au maximum 22 obtenu sans écrêtage, et les autres fréquences, notamment les fréquences adjacentes f₂ et f₃, sont éliminées. Ainsi, les signaux parasites résultant de l'écrêtage sont complètement éliminés.

Les cellules adjacentes (fréquences adjacentes) ne reçoivent donc aucun signal parasite.

Dans l'exemple de l'invention représenté sur la figure 3, on utilise un gabarit de filtrage 28 pour les signaux 32 de la cellule 10 qui n'élimine pas les bandes de fréquences adjacentes f₂ et f₃. Dans ces conditions, on peut abaisser le seuil de crête pour les signaux utiles dans la bande f₁ car les distorsions sont réparties sur l'ensemble des trois bandes. Dans cet exemple, le filtre présente un maximum 30 qui est le même pour les trois bandes adjacentes de fréquences f₁, f₂ et f₃.

Un tel gabarit doit cependant être choisi pour minimiser les effets perturbateurs sur les sites adjacents utilisant les mêmes fréquences f₁, f₂ ou f₃. On choisira le gabarit de filtrage de façon telle que les parasites produits en bord de cellule, à la frontière avec les sites adjacents, soient inférieurs aux parasites propres engendrés dans ces sites adjacents. On n'altère ainsi pas la capacité de ces sites ou cellules urbains.

De toute façon, les émissions entre cellules ou sites adjacents se distinguent par des codes de cryptage différents.

Dans l'exemple représenté sur la figure 4, on fait appel à un gabarit de filtrage 34 présentant un maximum m₁ dans la bande utile f₁ pour la cellule 10 qui est inférieur aux maxima m₂ et m₃ de ce même gabarit dans les bandes adjacentes f₂ et f₃. Dans ce cas, comme dans celui décrit avec la figure 3, le bruit dû à l'écrêtage est ainsi concentré sur les bandes adjacentes f₂ et f₃ non utilisées pour la cellule 10. Comme dans l'exemple de la figure 3, on choisit le gabarit de filtrage de façon telle qu'en bordure, pour les sites adjacents utilisant les mêmes bandes de fréquences du même opérateur, les parasites soient moins importants pour ces sites adjacents que les parasites créés de façon propre dans ces sites.

L'invention n'est, bien entendu, pas limitée au cas où l'opérateur dispose de trois bandes de fréquences adjacentes, la bande centrale étant utilisée pour la cellule à bas trafic. Ainsi, comme représenté sur la figure 5, un opérateur qui dispose de deux bandes de fréquences et qui utilise la bande de fréquences f₄ pour la cellule rurale, prévoit un gabarit de filtrage adapté à cette situation, à savoir pour la bande de fréquences f₄ un maximum de filtre à un niveau m₄, et pour la bande f₅ adjacente, un filtrage tel que le maximum m₅ soit supérieur au maximum m₄.

L'invention permet, quel que soit son mode de réalisation, d'utiliser pour la chaîne d'émission de la cellule 10, un amplificateur des porteuses du même type, c'est-à-dire avec les mêmes caractéristiques, que les amplificateurs utilisés pour les chaînes d'émission des sites adjacents 12, 14, 16. Toutefois, la marge de puissance de l'amplificateur de la cellule 10 sera plus faible que la marche de puissance des amplificateurs pour les sites adjacents. Dans ces conditions, son rendement est plus élevé. On peut ainsi prévoir pour la cellule rurale 10 une puissance d'émission qui est supérieure à la somme des puissances d'émission pour les sites adjacents.

La réduction du PAR (rapport de la puissance de crête à la puissance moyenne) ou de la marge de puissance permet une convergence rapide des signaux de prédistorsion numérique qui sont généralement utilisés pour la linéarisation des amplificateurs de puissance. Ainsi, le fonctionnement est plus stable.

## Revendications

1. Procédé de transmission de communications dans un système de télécommunication de type cellulaire faisant appel à plusieurs bandes de fréquences porteuses adjacentes et dans lequel une première cellule ou un premier site (10) utilise seulement une partie de ces bandes de fréquences, les signaux émis étant soumis à un écrêtage avant leur application à un amplificateur d'une chaîne d'émission afin d'optimiser le rendement de ce dernier, **caractérisé en ce qu'**on soumet les signaux (32) à émettre pour la première cellule (ou le premier site), avant leur application à l'entrée de l'amplificateur, à un filtrage (28 ; 34 ; m₄, m₅) pour lequel la densité de puissance du bruit d'écrêtage dans les bandes de fréquence adjacentes non-utilisées par cette première cellule n'est pas éliminée.

2. Procédé selon la revendication 1, **caractérisé en ce que** la densité de puissance du bruit d'écrêtage dans la (les) bande(s) de fréquences adjacente(s) est limitée en puissance de façon à ne pas créer, pour les fréquences adjacentes utilisées par les sites voisins, une contribution mesurable d'interférence.

3. Procédé selon la revendication 1 ou 2, **caractérisé en ce que** le filtrage pour la (les) bande(s) de fréquence(s) utile(s) de la première cellule (ou premier site) présente la même atténuation que le filtrage pour l' (les) autre(s) bande(s) de fréquence(s).

4. Procédé selon la revendication 1 ou 2, **caractérisé en ce que** le filtrage pour la (les) bande(s) de fréquence(s) utile(s) de la première cellule (ou du premier site) présente une atténuation supérieure à l'atténuation affectée à (aux) (l') autre (s) bande(s) de fréquence(s).

5. Procédé selon la revendication 1 ou 2, **caractérisé en ce que** le filtrage est tel que la contribution spectrale des distorsions dues à l'écrêtage est moindre dans la (les) bande(s) de fréquences utilisée(s) par la première cellule (ou le premier site) que dans la bande (les bandes) de fréquences adjacentes.

6. Procédé selon l'une des revendications 1 à 5, **caractérisé en ce que** le filtrage sur les bandes adjacentes à la (aux) bande(s) utile(s) pour la première cellule (ou le premier site) est choisi pour créer des interférences sur les sites ou cellules adjacents qui soient d'un niveau inférieur aux interférences propres créées dans ces sites ou cellules adjacents.

7. Procédé selon l'une des revendications 1 à 6, **caractérisé en ce qu'**à chaque communication est affecté un code choisi parmi un ensemble de codes orthogonaux.

8. Procédé selon l'une des revendications 1 à 7, **caractérisé en ce qu'**on attribue à la première cellule (ou au premier site) une bande de fréquences, ou un ensemble de bandes de fréquences, se trouvant au centre d'un groupe de bandes de fréquences utilisées par des cellules ou sites adjacents.

9. Procédé selon l'une des revendications précédentes, **caractérisé en ce que** la puissance d'émission dans la première cellule (ou le premier site) est supérieure à la somme des puissances d'émission dans les sites ou cellules adjacents.

10. Procédé selon la revendication 9, **caractérisé en ce que** l'amplificateur utilisé pour la chaîne d'émission dans la première cellule (ou premier site) et les amplificateurs utilisés pour les chaînes d'émission dans les sites ou cellules adjacents sont tous du type multiporteuses et ont tous les mêmes caractéristiques, à l'exception des marges de puissance, la marge de puissance de l'amplificateur de la première cellule (premier site) étant plus faible que la marge de puissance des amplificateurs pour les sites adjacents.

11. Emetteur à amplificateur de puissance pour système de télécommunication cellulaire utilisant plusieurs bandes de fréquences porteuses différentes, cet émetteur étant destiné à une cellule (10) (ou site) à laquelle (auquel) est attribué un nombre de bandes de fréquences porteuses inférieur au nombre total des bandes disponibles pour le système, cet émetteur étant pourvu de moyens d'écrêtage des signaux en amont d'un amplificateur de façon à optimiser le rendement de ce dernier, **caractérisé en ce qu'**il comporte un gabarit de filtrage qui effectue un écrêtage dans la (ou les) bande(s) de fréquences porteuses utile(s) pour la cellule (ou le site) ainsi que dans la (ou les) autre(s) bande(s) porteuse(s) du système de télécommunication, la contribution spectrale de puissance de cet écrêtage étant non nulle pour cette (ou ces) autre(s) bande(s) porteuse(s).

12. Emetteur selon la revendication 11, **caractérisé en ce que** le gabarit de filtrage comporte la même puissance d'écrêtage dans la (les) bande(s) de fréquences utile(s) que dans l' (les) autre(s) bande(s).

13. Emetteur selon la revendication 11, **caractérisé en ce que** le gabarit de filtrage est tel que l'atténuation est supérieure dans la (les) bande(s) utile(s) ou les bandes de fréquences utiles pour la première cellule que dans l' (les) autre(s) bande(s).
